# EUROPEAN PATENT APPLICATION

(11) **EP 2 595 295 A1**
(43) Date of publication of application: **22.05.2013**
(21) Application number: 10854656.5
(22) Date of filing: 14.07.2010
(51) Int. Cl.: H02M 5/458

(54) **SINGLE-PHASE TO THREE-PHASE VOLTAGE CONVERTER**

(71) Applicant: Sepsa, Electronica De Potencia, S.L., 28014 Madrid (ES); Union Fenosa Distribucion, S.A., 28033 Madrid (ES)
(72) Inventor: QUINTERO PAREDES, José de Jesús, E-28014 Madrid (ES); RAMOS ARANDA, Félix, E-28014 Madrid (ES); VAZQUEZ PERDOMO, Ramón Antonio, E-28014 Madrid (ES); GONZÁLEZ VIDAL, Ignacio, E-28014 Madrid (ES); NAVARRO CARRANZA, José Antonio, 28033 Madrid (ES); PEREZ TORRECILLAS, Alvaro, 28033 Madrid (ES)
(74) Representative: Carpintero Lopez, Francisco
(86) International application number: PCT/ES2010/070488
(87) International publication number: WO 2012/007598

(57) **Abstract**

The invention relates to a single-phase to three-phase AC voltage converter providing, from one or two AC input voltage phases plus a neutral, a three-phase output voltage plus the neutral. The converter of the invention comprises a neutral input line and one or two single-phase AC voltage input lines each comprising an input rectifier converting a single-phase AC input voltage into a DC voltage, a modulated inverter transforming the DC voltage into three-phase AC voltage, an AC voltage filter for reducing the high frequency harmonics produced in the inverter, a neutral output line connected to the neutral input line and a three-phase output line connected to the AC voltage filter.

## Description

### Field of the Invention

The present invention relates to the field of electric current converters and more specifically to systems for converting single-phase/two-phase AC input voltage into three-phase AC output voltage.

### Background of the Invention

Various inverter systems for converting single-phase/two-phase AC input voltage into three-phase AC output voltage are known in the art and are marketed. Most of these systems require an external generator, either a combustion engine or an electric motor, to enable generating three output phases. These systems with an engine/motor have drawbacks, such as for example noise and environmental pollution, limited phase imbalance, etc. Furthermore, they generally require a high start-up power and provide very low efficiency.

Document US5969957 for a two-phase to three-phase converter discloses a converter providing three-phase power in its output to a three-phase load from a single-phase supply. Said converter includes an inverter connected to two-phase input power lines and a bi-directional switch connected in series with one of the input power lines. The converter has three output lines, one connected to the inverter output, another connected to an input power line between the bi-directional switch and the inverter, and the third connected directly to the other input power line. This converter still has other drawbacks even though it solves some of the problems of the prior art. Primarily, the third phase generated by means of this converter has an amplitude less than that of the two initial phases due to circuit losses. Furthermore, this converter system does not apply in cases in which the three-phase load to be powered requires a neutral.

Therefore, there is still a need in the art for a voltage converter which converts single-phase/two-phase AC voltage into three-phase AC voltage with good efficiency, providing three stable output phases of the same amplitude while at the same time providing a neutral line.

### Summary of the Invention

The present invention relates to a voltage converter which converts single-phase/two-phase AC voltage into three-phase AC voltage comprising at least one single-phase AC voltage input line and a neutral, an input rectifier converting a single-phase AC input voltage into DC voltage, a modulated inverter transforming the DC voltage into three-phase AC voltage, an AC voltage filter for reducing the high frequency harmonics generated in the inverter, a neutral output line connected to the neutral input line and a three-phase output line connected to the AC voltage filter.

Therefore, by means of the converter of the present invention a three-phase AC voltage with a neutral is obtained in the output thereof from a single-phase/two-phase AC voltage input and a neutral.

According to an additional aspect of the invention, two single-phase AC voltage lines are used as input. In this case, the second single-phase AC voltage input line will comprise all the necessary specific components equivalent to those of the first single-phase AC voltage input.

According to another additional aspect of the present invention, the converter will comprise additional components suitable for providing operational safety and/or stability to the AC output voltage of the converter, such as, but not limited to, a first/second grounded input disconnector for protecting the equipment, a first/second input contactor and a first/second pre-charge circuit to prevent overloads during ignition in each of the first and second single-phase AC voltage input lines (when the latter is present), respectively, as well as an input filter for reducing the voltage ripple in its input and limiting the amplitude of the harmonics injected at the input and a differential output disconnector after the AC voltage filter to protect the system against shunts caused by the lack of insulation between the active conductors and the neutral or load short circuits.

### Brief Description of the Drawings

The present invention will be better understood with reference to the following drawings which illustrate preferred embodiments of the invention provided by way of example and which must not be interpreted as limiting the invention in any way.
Figure 1 illustrates a wiring diagram of a preferred embodiment according to the present invention.
Figures 2A and 2B respectively illustrate a block diagram and a wiring diagram of the additional embodiment according to the present invention.
Figure 3 is a perspective view of a casing of the converter according to the preferred embodiment of the present invention.

### Detailed Description of the Preferred Embodiments

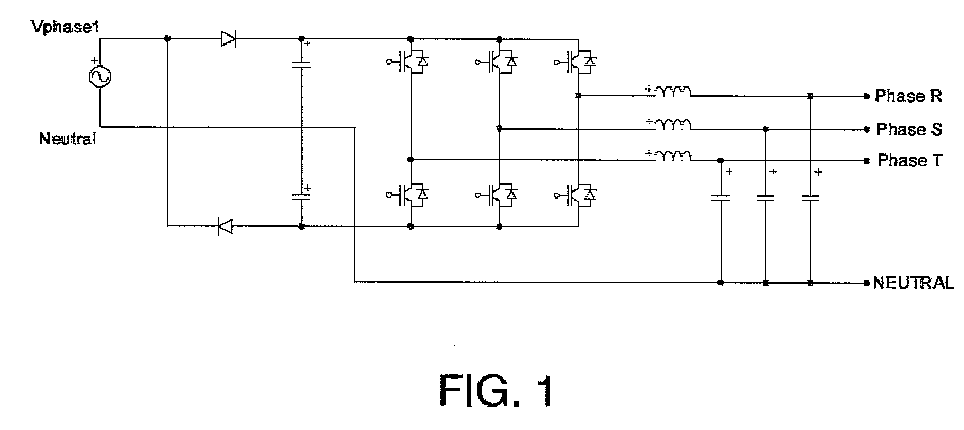

Figure 1 shows by way of a wiring diagram an embodiment according to the present invention, in which a three-phase output voltage plus a neutral line is obtained from just one single-phase AC input voltage plus a neutral line. This circuit comprises an input rectifier. The modulated inverter itself is then seen followed by an AC voltage filter the functions of which will be described below in this document. This figure illustrates the simplest embodiment according to the present invention.

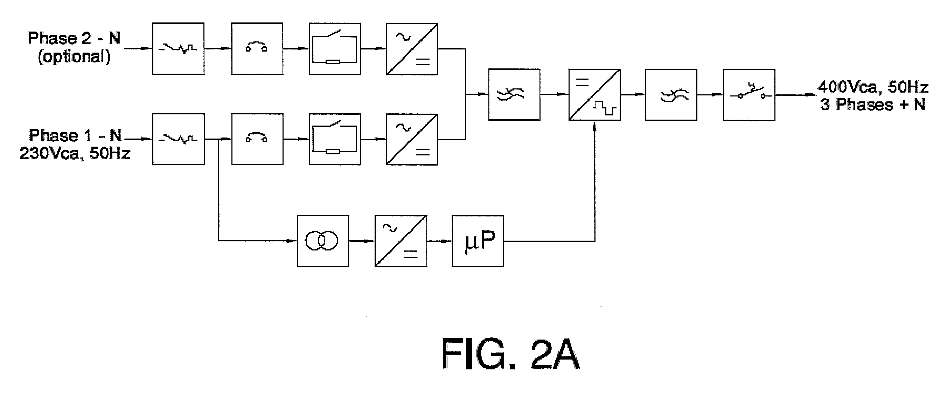

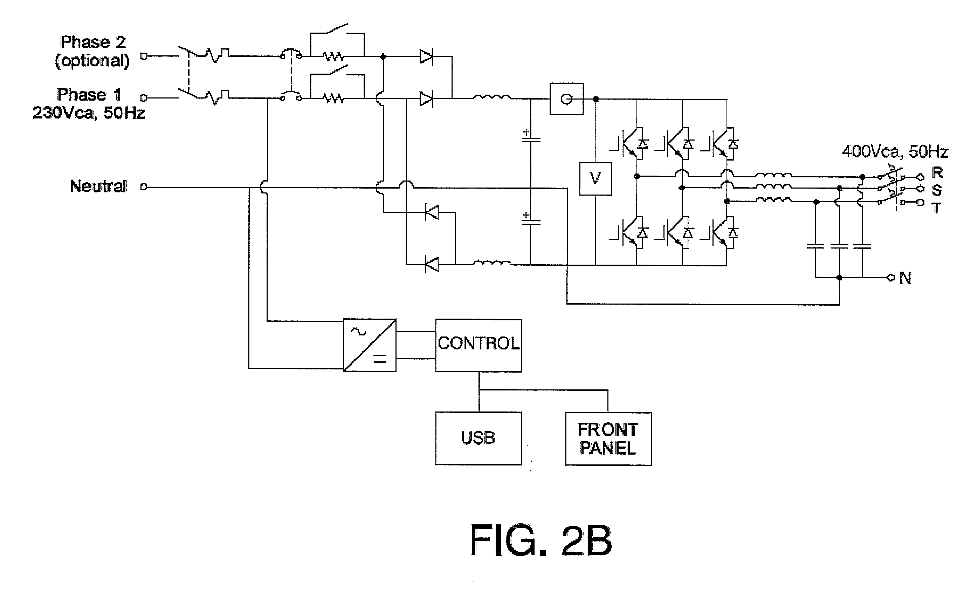

Figures 2A and 2B illustrate block and wiring diagrams according to an additional embodiment of the present invention in which the converter is powered with two single-phase voltages and a neutral line for generating a three-phase AC voltage plus a neutral line in the output. As observed in these figures, the converter comprises a neutral input line and two (first and second) single-phase AC voltage input lines.

In the preferred embodiment or in the additional embodiment, each of these single-phase AC voltage input lines comprises:
- a grounded input disconnector for protecting the equipment according to standards by means of a main (thermomagnetic) circuit breaker, which further allows disconnecting the equipment completely,
- a two-pole input contactor arranged between the active poles of the input,
- a pre-charge circuit which is based on a resistor in parallel with the contactor and which serves to limit the equipment switch-on current and thus prevent overloads during ignition,
- an input rectifier converting a single-phase/two-phase AC input voltage into a DC voltage. The converter further comprises:
- an input filter for reducing the voltage ripple in its input and limiting the amplitude of the high frequency harmonics injected at the input, which has two branches with a series inductance, a series diode and a parallel capacitor,
- a modulated inverter with IGBT semiconductors with sinusoidal pulse width modulation, transforming the DC voltage of the input thereof into a three-phase AC voltage, and by means of the control and modulation thereof, the low frequency harmonics are eliminated and the three-phase output voltage is regulated,
- an AC output voltage filter for reducing the high frequency harmonics produced in the inverter and thus obtaining the specified harmonic distortion, which has a coil and capacitors star connected to each of the phases,
- a differential (thermomagnetic) output disconnector which allows disconnecting the inverter output from the load such that the system is protected against derivations caused by the lack of insulation between the active conductors and the neutral and overloads,
- a neutral output line connected to the neutral input line, and
- a three-phase output line connected to the differential output disconnector.

As can be observed in these drawings, the converter according to this preferred embodiment of the invention further comprises a control circuit based on a programmable device. This circuit measures the input and output voltages and currents as well as a series of internal variables of the converter, and generates the necessary control commands for compensating for losses within a range, thus assuring that the generated phases have the amplitude that complies with the standards.

Likewise, the control has a communication for connecting the equipment to a computer (or a similar device) which facilitates maintenance and error detection because the programmable device detects possible faults or abnormal behaviors which are recorded in a memory, which can be downloaded by communications for subsequent analysis.

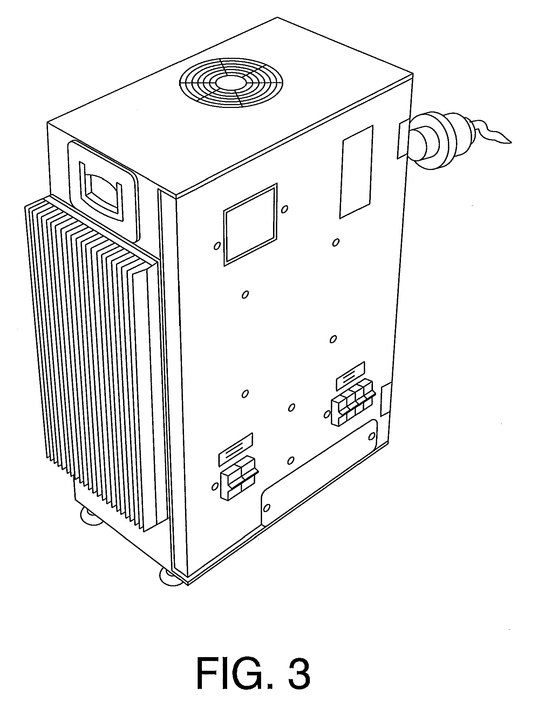

Figure 3 shows a perspective view of a casing for the inverter according to the preferred embodiment of the present invention. The single-phase input connection and the three-phase output connection are seen on the side. The inverter module itself for converting the DC voltage obtained from rectifying the single-phase/two-phase AC input voltage into three-phase AC output voltage is on the opposite side of this casing.

The person skilled in the art can introduce modifications in the preferred embodiments described above in the present invention without departing from the scope of the invention, for example, by adding or eliminating components to/from the circuit (such as the input disconnector, pre-charge circuit, input filter,...), provided that the resulting circuit can provide in the output a three-phase AC voltage plus a neutral line from one or two single-phase AC voltage input lines plus a neutral line. Particularly, the three phases of the three-phase AC output voltage will have substantially the same amplitude as that of the input.

For example, according to an additional preferred embodiment, the circuit of the converter according to the present invention further comprises a coil in the neutral circuit for the purpose of filtering the harmonics existing in this line.

According to the preferred embodiment of the present invention, when there is an input voltage of 230 Vca +-10% (according to UNE EN 50160 Standard) the converter provides a regulated output voltage of 230 Vca +-5%.

## Claims

1. Single-phase to three-phase AC voltage converter comprising:
- a neutral input line;
- a first single-phase AC voltage input line which in turn comprises a first input rectifier converting a single-phase AC input voltage into a DC voltage;
- a modulated inverter transforming the DC voltage of the input thereof into a three-phase AC voltage;
- an AC voltage filter for reducing the high frequency harmonics generated in the inverter and assuring the specified harmonic distortion of the output voltage;
- a neutral output line connected to the neutral input line; and
- a three-phase output line connected to the AC voltage filter;
whereby a three-phase AC voltage with a neutral is obtained from a single-phase AC voltage input and a neutral.

2. Converter according to claim 1, **characterized in that** it further comprises a second single-phase AC voltage input line which in turn comprises a second input rectifier converting a single-phase AC input voltage into a DC voltage, the voltage of the first input line and of the second input line being combined in the input filter.

3. Converter according to any of the preceding claims, **characterized in that** it further comprises:
- a filter after the input rectifier for reducing the voltage ripple in its input and limiting the amplitude of the harmonics injected at the input.

4. Converter according to claim 1, **characterized in that** the first single-phase AC voltage input line further comprises:
- a first grounded input disconnector for protecting the equipment;
- a first input contactor; and
- a first pre-charge circuit before the first input rectifier to prevent overloads during ignition.

5. Converter according to claims 2 and 4, **characterized in that** the second single-phase AC voltage input line further comprises:
- a second input disconnector for protecting the equipment;
- a second input contactor; and
- a second pre-charge circuit before the second input rectifier to prevent overloads during ignition.
the voltage of the first input line and of the second input line being combined in the input filter.

6. Converter according to any of the preceding claims, **characterized in that** it further comprises a control circuit measuring the input and output voltages and currents and generating the control commands necessary for compensating losses within a range, thus assuring that the generated phases have the same amplitude as the input phases.

7. Converter according to claim 6, **characterized in that** the control circuit further comprises fault detectors to facilitate converter maintenance.

8. Converter according to any of the preceding claims, **characterized in that** it further comprises a coil in the neutral circuit for filtering the harmonics in this line.

9. Converter according to any of the preceding claims, **characterized in that** it provides an output voltage of 230 Vca +-5% for an input voltage of 230 Vca +-10%.

10. Converter according to any of the preceding claims, **characterized in that** it further comprises:
- a differential output disconnector after the AC voltage filter to protect the system against shunts caused by the lack of insulation between the active conductors and the neutral and overloads (short circuit).
